# EUROPEAN PATENT SPECIFICATION

(11) **EP 1 860 344 B1**
(45) Date of publication and mention of the grant of the patent: **17.02.2010**
(21) Application number: 06252711.4
(22) Date of filing: 24.05.2006
(51) Int. Cl.: F16H 48/06

(54) **Differential gear system with a three-step control mechanism**
Ausgleichsgetriebesystem mit dreistufigem Stellantrieb
Système d'engrenage différentiel avec mécanisme de commande à trois positions

(43) Date of publication of application: 28.11.2007
(73) Proprietor: Liu, Jen-Chih, Kaohsiung City (TW)
(72) Inventor: Liu, Jen-Chih, Kaohsiung City (TW)
(74) Representative: Brown, Kenneth Richard

(56) References cited:
- US-A- 4 790 211
- US-B1- 6 450 915
- PATENT ABSTRACTS OF JAPAN vol. 1998, no. 08, 30 June 1998 (1998-06-30) -& JP 10 061748 A (KANZAKI KOKYUKOKI MFG CO LTD), 6 March 1998 (1998-03-06)
- PATENT ABSTRACTS OF JAPAN vol. 012, no. 091 (M-679), 24 March 1988 (1988-03-24) -& JP 62 227822 A (AISIN SEIKI CO LTD), 6 October 1987 (1987-10-06)

## Description

### Field of the Invention

The present invention relates to automobile differential gear systems, more particularly to a differential gear system with a three-step control mechanism adapted to achieve switching functions of on, off and lock of a differential gear system.

### Background of the Invention

Automobile differential gear system of the prior art have three functions: ON, OFF and LOCK. The ON and OFF functions are traditionally assigned in a common control unit, whereas the LOCK function is attributed to another mechanism. However, this design does not provide adroit control. The invention disclosed by U.S. patent number 5,997,428 is an example, in which the input shaft for the differential gear is switchable between ON and OFF. But the shaft is designed to be a double-section type, having merely the functions of ON and OFF.

On the other hand, the inventions disclosed by U.S. patent number 6,634,978 and 6,450,915 have the functions ON, OFF and LOCK are all disposed behind a side gear on one side of a planetary gear carrier, wherein a slide sleeve will be shifted stepwise to engage and drive the side gear or the planetary gear carrier. However, the engagement between the sleeve and the planetary gear carrier is realized behind the side gear on the inner rim of the outer shell of the sleeve. Therefore, not only the size of the control mechanism is enlarged but also the weight and the production cost are increased.

US 4 790 211 discloses a differential gear mechanism for four wheel drive vehicles for distributing drive power to a front wheel side differential gear and a rear wheel side speed reduction gear device. The mechanism has a centre differential gear in which a differential gear carrier is rotatably supported on shaft sections of left and right side gears, and a differential pinion on the carrier distributes the drive power to the side gears. The left side gear transmits power to the front wheel side differential gear. The right side gear transmits power via a ring gear mount casing and a ring gear thereon to a drive pinion shaft, whence the power is directed to the rear axles. A sleeve slidably splined to the shaft of the right side gear is actuable to selectively lock the right side gear against an inner ring supporting the differential pinion shaft and thereby lock the centre differential gear, or to disengage from the inner ring to release the centre differential gear to its operating condition.

### Summary of the Invention

The primary objective of the present invention is to provide a differential gear system with a three-step control mechanism that uses the axial motion of a single member to achieve three functions of ON, OFF and LOCK. The differential gear system has a locking mechanism installed in the planetary gear carrier between left and right gears thereof, whereby extra space for the locking mechanism is not necessary. The locking mechanism can also be mounted on the shaft of the gear other than the gear connected with a clutch sleeve. Therefore, the differential gear system is of small size, and its production cost will be reduced.

According to the present invention there is provided a differential gear system with a three-step control mechanism, comprising: a left shaft; a right shaft; a planetary gear carrier disposed between said left shaft and said right shaft; and a locking mechanism having a central retaining section which is located within said planetary gear carrier between a left gear and a right gear for economizing the installation space of said locking mechanism; whereby an axial motion of a single member will achieve functions of on, off and lock of said differential gear system.

In an embodiment, the left shaft and the right shaft are respectively one-piece axles provided with end connecting sections. The connecting section of the left shaft is connected to the left gear in the planetary gear carrier, and the connecting section of the right shaft is slidably connected with a clutch sleeve, whereby the clutch sleeve will shift along the axis of the planetary gear carrier. The clutch sleeve is provided with a retaining section for the engagement with the right shaft and the planetary gear carrier, whereby the clutch sleeve, driven by a push rod, will shift along the axis at three selected locations. As the push rod drives the clutch sleeve to the first location, it is not engaged with the right gear and the planetary gear carrier. Therefore, the differential gear system is in an OFF state. As the push rod drives the clutch sleeve along the axis to the second location, it is engaged with the right gear but not the planetary gear carrier. Therefore, the differential gear system is in an ON state. As the push rod drives the clutch sleeve along the axis to the third location, it is engaged with the right gear and the planetary gear carrier. Therefore, the differential gear system is in a LOCK state.

The three-step control mechanism can be applied to differential gear systems with spiral bevel gears and with regular gears. The locking mechanism can be mounted between two gears of the planetary gear carrier or on the shaft of the gear other than the gear connected with the clutch sleeve.

The various objects and advantages of the present invention will be more readily understood from the following detailed description when read in conjunction with the appended drawings.

### Brief Description of the Drawings

Fig. 1 is a side cross-sectional view of the first preferred embodiment of the present invention as a differential gear system with a three-step control mechanism, wherein the differential gear system is OFF.
Fig. 2 is a side cross-sectional view of the first preferred embodiment of the present invention as a differential gear system with a three-step control mechanism, wherein the differential gear system is ON.
Fig. 3 is a side cross-sectional view of the first preferred embodiment of the present invention as a differential gear system with a three-step control mechanism, wherein the differential gear system is LOCK.

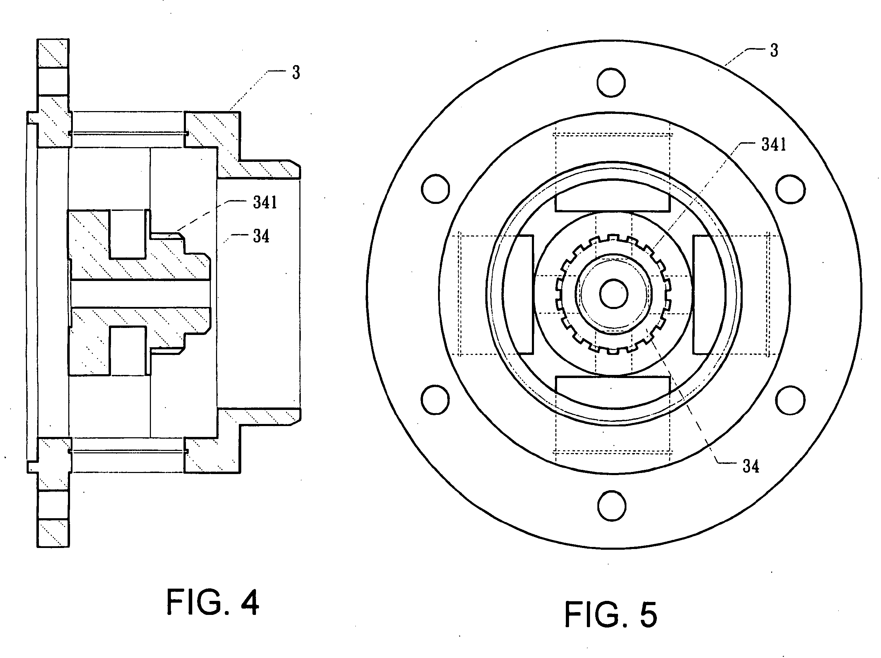

Fig. 4 is a cross-sectional view of the planetary gear carrier of the differential gear system with a three-step control mechanism in Fig. 1.
Fig. 5 is a right lateral view of the planetary gear carrier in Fig. 4.

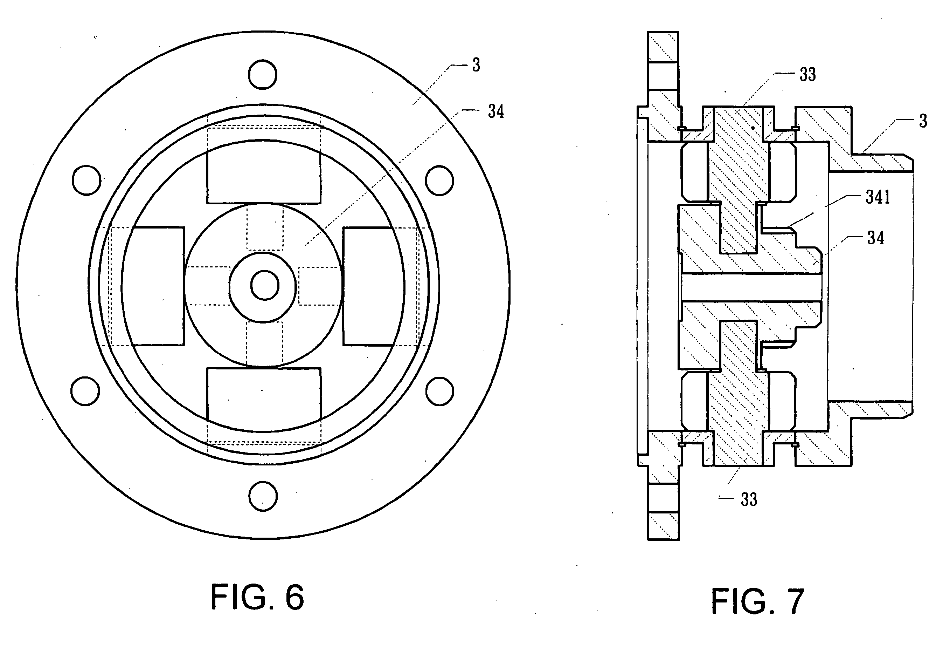

Fig. 6 is a left lateral view of the planetary gear carrier in Fig. 4.
Fig. 7 is a cross-sectional view of the planetary gear carrier and the planetary gear therein.
Fig. 8 is a side cross-sectional view of the second preferred embodiment of the present invention as a differential gear system with a three-step control mechanism.

### Detailed Description of the Preferred Embodiments

The present invention as a differential gear system with a three-step control mechanism uses the axial motion of a single member to achieve three functions of ON, OFF and LOCK. The differential gear system has a locking mechanism installed in the planetary gear carrier between two planetary gears thereof, whereby extra space for the locking mechanism is not necessary. The present invention can be applied to differential gear systems with spiral bevel gears and with regular gears. The locking mechanism can be mounted between two planetary gears of the planetary gear carrier or on the shaft of the planetary gear corresponding to the other planetary gear connected with the clutch sleeve.

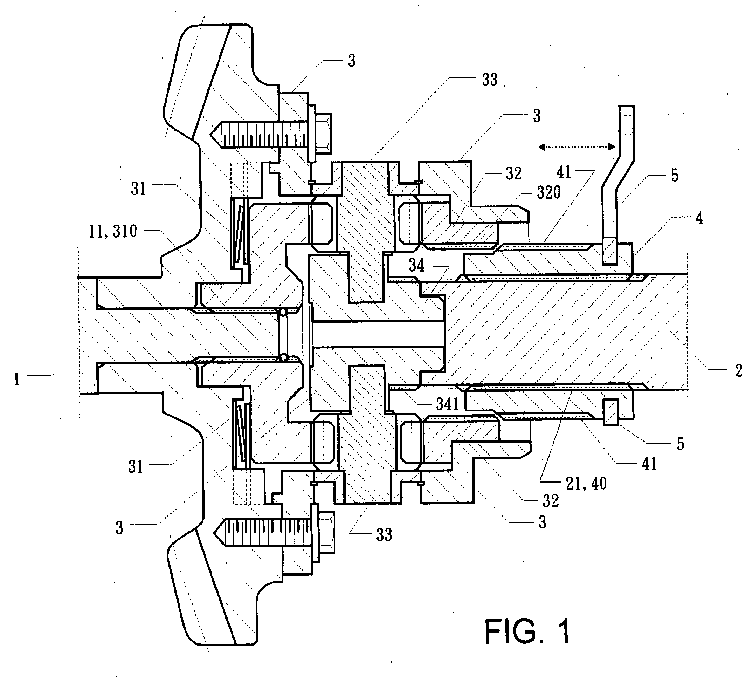

Referring to Fig. 1, the first preferred embodiment of the present invention as a differential gear system with a three-step control mechanism comprises a left shaft 1, a right shaft 2 and a planetary gear carrier 3 between the left shaft 1 and the right shaft 2. The left shaft 1 and the right shaft 2 are each a section of axle.

The ends of the left shaft 1 and the right shaft 2 are each provided with a connecting section (11, 21). The connecting section 11 of the left shaft 1 is inserted into a retaining section 310 of the left gear 31 (which can be a spiral bevel gear or a planar gear) of the planetary gear carrier 3, and the connecting section 21 of the right shaft 2 is connected with a retaining section 40 of a clutch sleeve 4 capable of ding axial shift.

The inner surface and the outer surface of the clutch sleeve 4 are respectively provided with retaining sections 40, 41; the retaining section 40 is slidably engaged with the connecting section 21 of the right shaft 2, the retaining section 41 is engaged with the right gear 32 (which can be a spiral bevel gear or a planar gear or face gear or surface gear) of the planetary gear carrier 3. The clutch sleeve 4 is driven by a push rod 5 to do a three-step axial shift, wherein the retaining section 41 will be secured by the retaining section 341 of the engagement mount 34. An inner rim and the retaining section 341 define receptacle for the clutch sleeve 4 when it is shifted inwardly.

As shown in Figs. 1 to 3, the planetary gear carrier 3 comprises not only the left gear 31 (which can be a spiral bevel gear or a planar gear), the right gear 32 (which can be a spiral bevel gear or a planar gear) and the central retaining section 341 but also a planetary gear 33. The axial hole of the left gear 31 is provided with the retaining section 310, and the axial hole of the right gear 32 is provided with a second retaining section 320. The engagement mount 34 is provided with the retaining section 341 for the engagement of the clutch sleeve 4. The retaining section 341 can formed on the outer or inner rims of the engagement mount 34.

As shown in Fig. 1, the push rod 5 drives the clutch sleeve 4 to the first location where the clutch sleeve 4 is not engaged with the right gear 32 and the planetary gear carrier 3. Therefore, the differential gear system is in an OFF state.

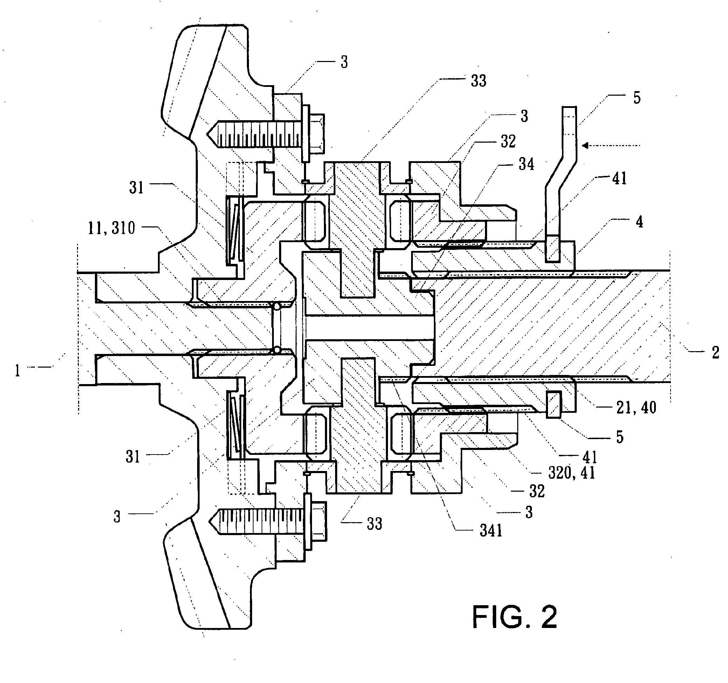

As shown in Fig. 2, the push rod 5 drives the clutch sleeve 4 along the axis to the second location where the clutch sleeve 4 is engaged with the right gear 32 but not the planetary gear carrier 3. Therefore, the differential gear system is in an ON state.

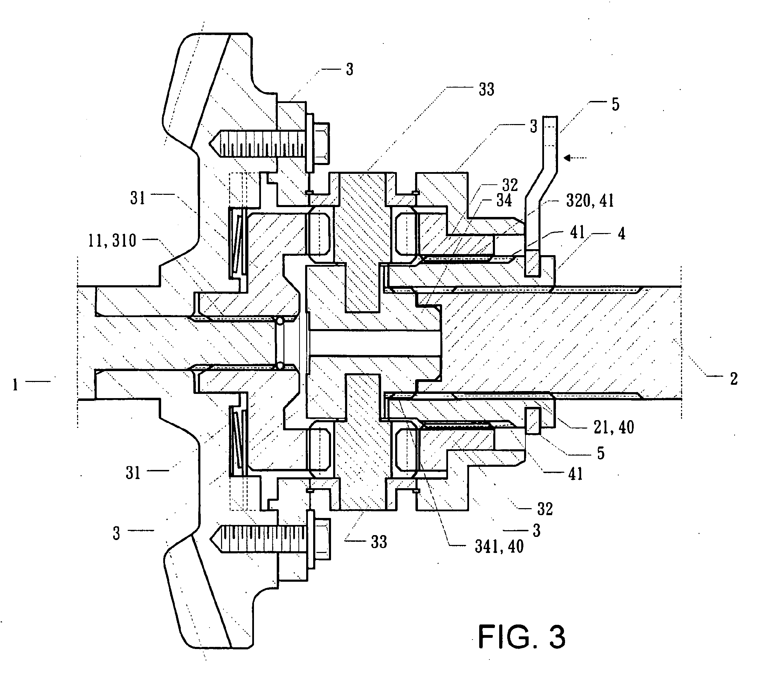

As shown in Fig. 3, the push rod 5 drives the clutch sleeve 4 along the axis to the third location where the clutch sleeve 4 is engaged with the right gear 32 and the planetary gear carrier 3. Therefore, the differential gear system is in a LOCK state.

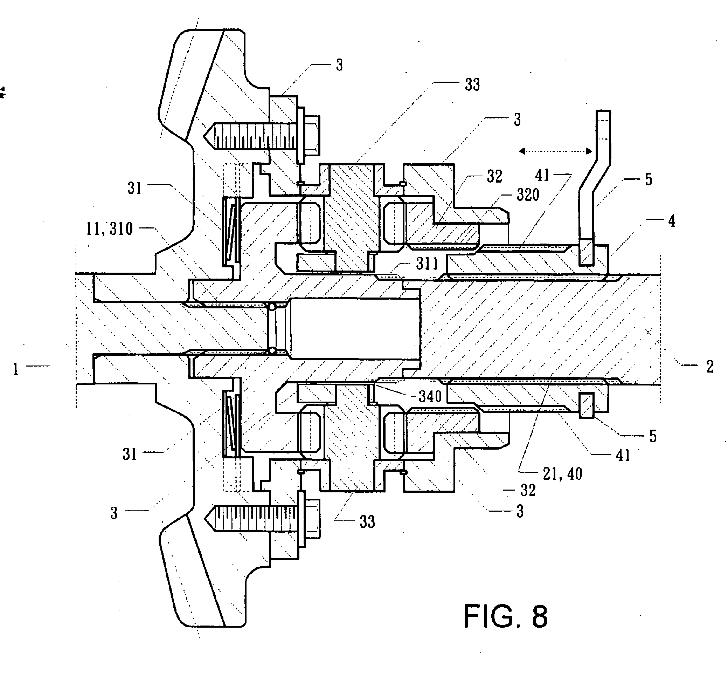

Referring to Fig. 8, another preferred embodiment of the present invention as a differential gear system with a three-step control mechanism has a planetary gear carrier 3 without an engagement mount 34 but with an axial through hole 340. The outer surface or the inner surface of the left gear 31 is provided with a retaining section 311, which replaces the retaining section 341 on the engagement mount 34, whereby the clutch sleeve 4 can still be engaged with the left gear 31 via axial shifting and will attain an equivalent LOCK effect.

The planetary gear carrier 3 of the preferred embodiment shown in Fig. 8 has an axial through hole 340, whereby the clutch sleeve 4 can be directly engaged with the left shaft 1 as it is shifting inward, and whereby an equivalent LOCK effect can be attained.

Therefore, a differential gear system with a three-step control mechanism of the present invention indeed has a locking mechanism installed in the planetary gear carrier 3 between two planetary gears of the planetary gear carrier 3, whereby extra space for the locking mechanism is not necessary. Therefore, the differential gear system is of small size, and its production cost will be reduced.

The present invention is thus described, and it will be obvious that the same may be varied in many ways. Such variations are not to be regarded as a departure from the scope of the present invention, and all such modifications as would be obvious to one skilled in the art are intended to be included within the scope of the following claims.

## Claims

1. A differential gear system with a three-step control mechanism, comprising:
a left shaft (1);
a right shaft (2);
a planetary gear carrier (3) disposed between said left shaft and said right shaft; and
a locking mechanism (34, 341; 31, 311) having a central retaining section (341; 311) which is located within said planetary gear carrier between a left gear (31) and a right gear (32) for economizing the installation space of said locking mechanism;
whereby an axial motion of a single member (41) will achieve functions of on, off and lock of said differential gear system.

2. A differential gear system with a three-step control mechanism according to claim 1 wherein said left gear and said right gear are planar gears.

3. A differential gear system with a three-step control mechanism according to claim 1 wherein said left gear and said right gear are spiral bevel gears.

4. A differential gear system with a three-step control mechanism according to claim 1 wherein a control mechanism (4) for switching between on, off, and lock functions of said differential gear system is installed between either of said left and right gears and a corresponding shaft.

5. A differential gear system with a three-step control mechanism according to claim 1 wherein said locking mechanism comprises an engagement mount (34) at a central portion of said planetary gear carrier; said engagement mount being provided with said central retaining section (341) for engagement.

6. A differential gear system with a three-step control mechanism according to claim 5, wherein said retaining section (341) is formed on an outer rim of said engagement mount (34).

7. A differential gear system with a three-step control mechanism according to claim 5, wherein said retaining section (341) is formed on an inner rim of said engagement mount (34).

8. A differential gear system with a three-step control mechanism according to claim 5, wherein:
said left shaft is a one-piece axle with an end connecting section (11) engaged with said left gear;
said right shaft is a one-piece axle with an end connecting section (21) engaged with a retaining section (40) of a clutch sleeve mounted on said right shaft; and
said retaining section of said engagement mount is engageable with said clutch sleeve.

9. A differential gear system with a three-step control mechanism according to claim 8 wherein said clutch sleeve of said three-step control mechanism has retaining sections (40, 41) on both an inner and an outer surfaces.

10. A differential gear system with a three-step control mechanism according to claim 9 wherein the inner retaining section (40) of said clutch sleeve is locked on one end with said connecting section (21) of said right shaft and on the other end is slidably connectable with said retaining section (341) of said planetary gear carrier; the outer retaining section (41) of said clutch sleeve being engaged with a retaining section (320) in said right gear (32).

11. A differential gear system with a three-step control mechanism according to claim 8 wherein said clutch sleeve (4) is arranged to be driven by a push rod (5) to selected locations in an axial direction.

12. A differential gear system with a three-step control mechanism according to claim 1, wherein:
said left shaft is a one-piece axle with an end connecting section (11);
said right shaft is a one-piece axle with an end connecting section (21) engaged with a retaining section (40) of a clutch sleeve (4) capable of shifting axially; and
said planetary gear carrier has a central through hole (340), an axial outer or inner wall of said left gear (31) further including the retaining section (311), said retaining section (311) being arranged for the engagement with said clutch sleeve (4).

13. A differential gear system with a three-step control mechanism according to claim 12 wherein said clutch sleeve (4) has retaining sections (40, 41) on both its inner and outer surfaces.

14. A differential gear system with a three-step control mechanism according to claim 13 wherein the inner retaining section of said clutch sleeve is locked on one end with said connecting section (21) of said right shaft and on the other end is slidably connectable with said retaining section (311) of said left gear; the outer retaining section of said clutch sleeve being engaged with a retaining section (320) in said right gear (32).

15. A differential gear system with a three-step control mechanism according to claim 1, wherein:
said left shaft is a one-piece axle with an end connecting section forming said central retaining section and engageable with a retaining section of a clutch sleeve capable of shifting axially;
said right shaft is a one-piece axle with an end connecting section engaged with said retaining section of said clutch sleeve capable of shifting axially; and
said planetary gear carrier has a central through hole, an axial inner wall of said left gear further including a retaining section engaged with said connecting section of said left shaft.

## Patentansprüche

1. Ausgleichsgetriebesystem mit dreistufiger Steuerungsvorrichtung, die umfasst:
eine linke Welle (1);
eine rechte Welle (2);
einen Planetenradträger (3), der zwischen der linken und der rechten Welle angeordnet ist, und
eine verriegelungsvorrichtung (34, 341; 31, 311) mit einem mittleren Halteabschnitt (341; 311), der sich innerhalb des Planetenradträgers zwischen einem linken Rad (31) und einem rechten Rad (32) befindet, um die Verriegelungsvorrichtung platzsparend einbauen zu können,
wobei eine axiale Bewegung eines einzigen Elementes (41) die Funktionen "Ein", "Aus" und "verriegeln" des Ausgleichgetriebesystems bewirkt.

2. Ausgleichsgetriebesystem mit dreistufiger Steuerungsvorrichtung nach Anspruch 1, wobei das linke und das rechte Rad planare Räder sind.

3. Ausgleichsgetriebesystem mit dreistufiger Steuerungsvorrichtung nach Anspruch 1, wobei das linke und das rechte Rad Spiralkegelräder sind.

4. Ausgleichsgetriebesystem mit dreistufiger Steuerungsvorrichtung nach Anspruch 1, wobei ein Steuerungsmechanismus (4) zum Hin- und Herschalten zwischen den Funktionen "Ein", "Aus" und "Verriegeln" des Ausgleichsgetriebesystems zwischen dem linken oder rechten Rad und einer entsprechenden Welle eingebaut ist.

5. Ausgleichsgetriebesystem mit dreistufiger Steuerungsvorrichtung nach Anspruch 1, wobei die Verriegelungsvorrichtung eine Eingriffshalterung (34) an einem mittleren Teil des Planetenradträgers umfasst, und wobei die Eingriffsfalterung zum Eingreifen mit dem mittleren Halteabschnitt (341) versehen ist.

6. Ausgleichsgetriebesystem mit dreistufiger Steuerungsvorrichtung nach Anspruch 5, wobei der Halteabschnitt (341) auf einem äußeren Rand der Eingriffshalterung (34) ausgebildet ist.

7. Ausgleichsgetriebesystem mit dreistufiger Steuerungsvorrichtung nach Anspruch 5, wobei der Halteabschnitt (341) auf einem inneren Rand der Eingriffshalterung (34) ausgebildet ist.

8. Ausgleichsgetriebesystem mit dreistufiger Steuerungsvorrichtung nach Anspruch 5, wobei:
die linke Welle eine einteilige Achse mit einem Endverbindungsabschnitt (11) ist, der mit dem linken Rad im Eingriff steht,
die rechte Welle eine einteilige Achse mit einem Endverbindungsabschnitt (21) ist, der mit einem Halteabschnitt (40) einer auf der rechten Welle angebrachten Kupplungshülse im Eingriff steht, und
wobei der Halteabschnitt der Eingriffshalterung mit der Kupplungshülse in Eingriff gebracht werden kann.

9. Ausgleichsgetriebesystem mit dreistufiger Steuerungsvorrichtung nach Anspruch 8, wobei die Kupplungshülse der dreistufigen Steuerungsvorrichtung Halteabschnitte (40, 41) sowohl auf der Innen- als auch der Außenseite aufweist.

10. Ausgleichsgetriebesystem mit dreistufiger Steuerungsvorrichtung nach Anspruch 9, wobei der innere Halteabschnitt (40) der Kupplungshülse an einem Ende mit dem Verbindungsabschnitt (21) der rechten Welle verriegelt ist und am anderen Ende verschiebbar mit dem Halteabschnitt (341) des Planetenradträgers verbunden werden kann, wobei der äußere Halteabschnitt (41) der Kupplungshülse im Eingriff mit einem Halteabschnitt (320) in dem rechten Rad (32) steht.

11. Ausgleichsgetriebesystem mit dreistufiger Steuerungsvorrichtung nach Anspruch 8, wobei die Kupplungshülse (4) dafür eingerichtet ist, durch eine Schubstange (5) an ausgewählte Stellen in einer axialen Richtung getrieben zu werden.

12. Ausgleichsgetriebesystem mit dreistufiger Steuerungsvorrichtung nach Anspruch 1, wobei:
die linke Welle eine einteilige Achse mit einem Endverbindungsabschnitt (11) ist;
die rechte Welle eine einteilige Achse mit einem Endverbindungsabschnitt (21) ist, der mit einem Halteabschnitt (40) einer axial verschiebbaren Kupplungshülse (4) im Eingriff steht; und
der Planetenradträger ein mittleres Durchgangsloch (340) aufweist, wobei eine axiale Außen- oder Innenwand des linken Rades (31) weiter den Halteabschnitt (311) umfasst, wobei der Halteabschnitt (311) für den Eingriff mit der Kupplungshülse (4) eingerichtet ist.

13. Ausgleichsgetriebesystem mit dreistufiger Steuerungsvorrichtung nach Anspruch 12, wobei die Kupplungshülse (4) Halteabschnitte (40, 41) sowohl auf der Innen- als auch der Außenseite aufweist.

14. Ausgleichsgetriebesystem mit dreistufiger Steuerungsvorrichtung nach Anspruch 13, wobei der innere Halteabschnitt der Kupplungshülse an einem Ende mit dem Verbindungsabschnitt (21) der rechten Welle verriegelt ist und am anderen Ende verschiebbar mit dem Halteabschnitt (311) des linken Rads verbunden werden kann, wobei der äußere Halteabschnitt der Kupplungshülse im Eingriff mit einem Halteabschnitt (320) in dem rechten Rad (32) steht.

15. Ausgleichsgetriebesystem mit dreistufiger Steuerungsvorrichtung nach Anspruch 1, wobei:
die linke Welle eine einteilige Achse mit einem Endverbindungsabschnitt ist, der den mittleren Halteabschnitt bildet und mit einem Halteabschnitt einer Kupplungshülse, die axial verschoben werden kann, in Eingriff gebracht werden kann;
die rechte Welle eine einteilige Achse mit einem Endverbindungsabschnitt ist, der mit dem Halteabschnitt der axial verschiebbaren Kupplungshülse im Eingriff steht, und
der Planetenradträger ein mittleres Durchgangsloch aufweist, wobei eine axiale Innenwand des linken Rades weiter einen Halteabschnitt umfasst, der mit dem Verbindungsabschnitt der linken Welle im Eingriff steht.

## Revendications

1. Système d'engrenage différentiel avec un mécanisme de commande à trois positions, comprenant :
un arbre gauche (1) ;
un arbre droit (2) ;
un porte-planétaire (3) disposé entre l'arbre gauche et l'arbre droit ; et
un mécanisme de verrouillage (34, 341 ; 31, 311) avec un section de retenue centrale (341 ; 311) qui est située à l'intérieur du porte-planétaire entre un pignon gauche (31) et un pignon droit (32) pour faire l'économie de l'espace d'installation du mécanisme de verrouillage ;
moyennant quoi un mouvement axial d'un seul élément (41) réalisera les fonctions marche, arrêt et verrouillage du système d'engrenage différentiel.

2. Système d'engrenage différentiel avec un mécanisme de commande à trois positions selon la revendication 1, dans lequel le pignon gauche et le pignon droit sont des pignons plans.

3. Système d'engrenage différentiel avec un mécanisme de commande à trois positions selon la revendication 1, dans lequel le pignon gauche et le pignon droit sont des pignons coniques à denture hélicoïdale.

4. Système d'engrenage différentiel avec un mécanisme de commande à trois positions selon la revendication 1, dans lequel un mécanisme de commande (4) pour la manoeuvre entre les fonctions marche, arrêt et verrouillage du système d'engrenage différentiel est installé entre les pignons gauche et droit et un arbre correspondant.

5. Système d'engrenage différentiel avec un mécanisme de commande à trois positions selon la revendication 1, dans lequel le mécanisme de verrouillage comprend un montage d'engrènement (34) au niveau d'une partie centrale du porte-planétaire, ledit montage d'engrènement étant pourvu de la section de retenue centrale (341) en vue d'un engrènement.

6. Système d'engrenage différentiel avec un mécanisme de commande à trois positions selon la revendication 5, dans lequel la section de retenue (341) est formée sur un bord extérieur du montage d' engrènement (34) .

7. Système d'engrenage différentiel avec un mécanisme de commande à trois positions selon la revendication 5, dans lequel la section de retenue (341) est formée sur un bord intérieur du montage d' engrènement (34) .

8. Système d'engrenage différentiel avec un mécanisme de commande à trois positions selon la revendication 5, dans lequel :
l'arbre gauche est un axe d'une seule pièce avec une section de liaison d'extrémité (11) engrenée avec le pignon gauche ;
l'arbre droit est un axe d'une seule pièce avec une section de liaison d'extrémité (21) engrenée avec une section de retenue (40) d'un manchon d'accouplement monté sur l'arbre droit ; et
la section de retenue du montage d'engrènement est apte à s'engrener avec le manchon d'accouplement.

9. Système d'engrenage différentiel avec un mécanisme de commande à trois positions selon la revendication 8, dans lequel le manchon d'accouplement du mécanisme de commande à trois positions a des sections de retenue (40, 41) à la fois sur une surface intérieure et sur une surface extérieure.

10. Système d'engrenage différentiel avec un mécanisme de commande à trois positions selon la revendication 9, dans lequel la section de retenue intérieure (40) du manchon d'accouplement est verrouillée sur une extrémité avec la section de liaison (21) de l'arbre droit, et est apte à être reliée de manière coulissante, sur l'autre extrémité, à la section de retenue (341) du porte-planétaire ; la section de retenue extérieure (41) du manchon d'accouplement étant engrenée avec une section de retenue (320) dans le pignon droit (32).

11. Système d'engrenage différentiel avec un mécanisme de commande à trois positions selon la revendication 8, dans lequel le manchon d'accouplement (4) est conçu pour être entraîné par une bielle (5) jusqu'à des endroits choisis, dans un sens axial.

12. Système d'engrenage différentiel avec un mécanisme de commande à trois positions selon la revendication 1, dans lequel :
l'arbre gauche est un axe d'une seule pièce avec une section de liaison d'extrémité (11) ;
l'arbre droit est un axe d'une seule pièce avec une section de liaison d'extrémité (21) engrenée avec une section de retenue (40) d'un manchon d'accouplement (4) apte à être déplacé axialement ; et
le porte-planétaire a un trou traversant central (340), une paroi axiale extérieure ou intérieure du pignon gauche (31) comprenant par ailleurs la section de retenue (311), laquelle section de retenue (311) est conçue pour s'engrener avec le manchon d'accouplement (4).

13. Système d'engrenage différentiel avec un mécanisme de commande à trois positions selon la revendication 12, dans lequel le manchon d'accouplement (4) a des sections de retenue (40, 41) à la fois sur sa surface intérieure et sur sa surface extérieure.

14. Système d'engrenage différentiel avec un mécanisme de commande à trois positions selon la revendication 13, dans lequel la section de retenue intérieure du manchon d'accouplement est verrouillée sur une extrémité avec la section de liaison (21) de l'arbre droit, et est apte à être reliée de manière coulissante, sur l'autre extrémité, à la section de retenue (311) du pignon gauche ; la section de retenue extérieure du manchon d'accouplement étant engrenée avec une section de retenue (320) dans le pignon droit (32).

15. Système d'engrenage différentiel avec un mécanisme de commande à trois positions selon la revendication 1, dans lequel :
l'arbre gauche est un axe d'une seule pièce avec une section de liaison d'extrémité qui forme la section de retenue centrale et qui est apte à s'engrener avec une section de retenue d'un manchon d'accouplement apte à être déplacé axialement ;
l'arbre droit est un axe d'une seule pièce avec une section de liaison d'extrémité engrenée avec la section de retenue du manchon d'accouplement apte à être déplacé axialement ; et
le porte-planétaire a un trou traversant central, une paroi intérieure axiale du pignon gauche comprenant par ailleurs une section de retenue engrenée avec la section de liaison de l'arbre gauche.
